# EUROPÄISCHE PATENTSCHRIFT

(11) **EP 4 470 107 B1**
(45) Veröffentlichungstag und Bekanntmachung des Hinweises auf die Patenterteilung: **12.08.2026**
(21) Anmeldenummer: 23701769.4
(22) Anmeldetag: 26.01.2023
(51) Int. Cl.: H02S 50/00

(54) **REGELUNG EINER SOLARKRAFTANLAGE**
CONTROL OF A SOLAR POWER SYSTEM
RÉGULATION D'UNE INSTALLATION À ÉNERGIE SOLAIRE

(30) Priorität: 28.01.2022 EP 22153880
(43) Veröffentlichungstag der Anmeldung: 04.12.2024
(73) Patentinhaber: FRONIUS INTERNATIONAL GmbH, 4643 Pettenbach (AT)
(72) Erfinder: GRASBÖCK, Richard, 4600 Wels-Thalheim (AT); GRAF, Johannes, 4600 Wels-Thalheim (AT); WIESER, Stefan, 4600 Wels-Thalheim (AT); FASTHUBER, Christian, 4600 Wels-Thalheim (AT)
(74) Vertreter: Weiss Patentanwalts GmbH
(86) Internationale Anmeldenummer: PCT/EP2023/051858
(87) Internationale Veröffentlichungsnummer: WO 2023/144239

(56) Entgegenhaltungen:
- DE-A1- 102014 003 816
- US-A1- 2018 269 688

## Beschreibung

Die gegenständliche Erfindung betrifft ein Verfahren und eine Vorrichtung zum Optimieren eines Leistungsarbeitspunkts eines Solarzellenstacks, das eine Mehrzahl an Modulen und einen Wechselrichter aufweist, wobei jedes Modul der Mehrzahl an Modulen eine MLSD-Einheit aufweist, die das verbundene Modul abschaltet, sobald eine Modulspannung des jeweiligen Moduls einen ersten Modulspannungsgrenzwert unterschreitet, und bei Überschreiten eines vorgegebenen zweiten Modulspannungsgrenzwertes zuschaltet. Das Dokument DE 10 2014 003816 A1 beschreibt ein Verfahren zum Optimieren von Solarzellenstacks.

Großtechnische Solaranlagen bestehen im Regelfall aus einer Mehrzahl an sogenannten Solarzellenstacks, welche eine Vielzahl, oftmals sechzehn bis achtzehn, an Modulen in Serie aufweisen. Oftmals sind die Module in Strängen angeordnet, wobei jedes Solarzellenstack an einem Eingang eines Wechselrichters angeschlossen ist. Jedes Modul selbst weist wiederum eine hohe Anzahl an Einzelzellen auf, wobei ein Modul momentan ungefähr hundert Einzelzellen enthalten kann. Solche Solarzellenstacks können Gleichspannungen von bis zu 1000 V (Gleichstrom) erzeugen, mit mehreren Ampere Strom. Jeder Strang liefert dabei die Gleichspannung von 1000 V. Je nach Strombedarf werden mehrere parallel Stränge zusammengeschlossen. Es kann bei hohem Strombedarf auch möglich sein mehrere Solarzellenstacks parallel zu betreiben. Eine Optimierung solcher Solaranlagen kann auf leistungselektronischer Basis erfolgen, indem abhängig von der Wetterlage und Tageszeit die abgegebene Leistung einer Solaranlage optimiert wird und dabei ein Leistungsarbeitspunkt (maximum power point = MPP) des Solarzellenstacks eingestellt wird. Dabei werden zwei Mechanismen unterschieden. Erstens gibt es einen sogenannten MPP-Scan, welcher eine Strom-Spannungskennlinie jedes Moduls zwischen der Leerlaufspannung (Strom ist null) und dem Kurzschlussstrom (Spannung ist null) analysiert. Diese Strom-Spannungskennlinien haben bekanntermaßen einen nichtlinearen Verlauf, der von Modul zu Modul gewisse Unterschiede aufweisen kann. Die Unterschiede werden beispielsweise durch unterschiedliche Produktionsbedingungen, bspw. durch Gitterstörstellen oder mechanische Mängel, sowie Verschmutzung oder Verschattung im Betrieb verursacht. Abhängig von allen ermittelten Strom-Spannungskennlinien der Module des Solarzellenstacks, wird der Leistungsarbeitspunkt eingestellt. Da während eines MPP-Scans die Stromproduktion unterbrochen wird, ist es wünschenswert solche MPP-Scans einerseits möglichst schnell und andererseits möglichst selten, also mit möglichst langen Zeitintervallen zwischen einzelnen MPP-Scans, durchzuführen. Beispielsweise kann ein einzelner MPP-Scan ein paar Sekunden dauern und kann ca. alle zehn Minuten durchgeführt werden.

Zweitens wir ein sogenannter MPP-Tracker verwendet, um die Leistung zwischen den einzelnen MPP-Scans zu optimieren. Dieser MPP-Tracker verändert den Strom bzw. die Spannung nur minimal um einen Regelparameterbereich, um den, durch den MPP-Scan vorgegebenen, Leistungsarbeitspunkt, und garantiert somit eine optimierte Leistung des gesamten Solarzellenstacks.

Heutige Solarzellenstacks verwenden sogenannte "module level shutdown (MLSD) Einheiten, welche vom Solarzellenstack selbst mit der nötigen Energie versorgt werden. MLSD- Einheiten befriedigen ein Sicherheitsbedürfnis bei Solarzellenstacks, welche bei hohen Gleichspannungen und Leistungen betrieben werden, und werden verwendet, um die Solarzellenstacks in einen ungefährlichen Betriebszustand zu versetzen. Beispielsweise können bei Löscharbeiten bei einem Brand an einer Solaranlage die hohen Spannungen der Solarzellenstacks eine Gefahrenquelle für Personen darstellen.

MLSD-Einheit basierte Abschaltungen weisen im Regelfall eine Hysterese auf. Bei Minimalspannungen von beispielweise 8 VDC (Gleichspannung) schaltet die MLSD-Einheit automatisch das korrespondierende Modul ab, und fährt dieses erst wieder bei etwas höheren Spannungen, wie 10 VDC, hoch. Weiters wird vom Wechselrichter, welcher üblicherweise auch Steuerfunktionen in einem Solarzellenstack ausführt, ein regelmäßiges Signal, das sogenannte "Power-Line-Communication (PLC)" Signal eigekoppelt, um deaktivierte Module bei Überschreiten der oberen Grenzspannung, im obigen Beispiel 10 VDC, wieder hochzufahren. Da das Intervall dieses Signals im Sekundenbereich liegt, kann es folglich auch, neben der Spannungs-Hysterese, zu Zeiteffekten (wie Verzögerungen) beim Hochfahren nach MLSD-Einheit basierten Abschaltung kommen, wenn der MPP-Scan nicht mit dem PLC-Signal abgestimmt ist.

MPP-Scans im Stand der Technik variieren entweder Strom oder Spannung im Solarzellenstack und können somit verschiedene Strom/Spannungs-Werte abtasten. Aufgrund von Unterschieden in den Modulen selbst und aufgrund von Verschmutzung und Verschattung kann es passieren, dass beim nominell gleichen Stromwert, speziell nahe des Kurzschlussstroms, einige Module hohe Spannungen aufweisen, während andere Module unter die Minimalspannung der MLSD-Einheit basierten Abschaltung gefallen sind, und damit die MLSD-Einheit das oder die jeweiligen Module abschaltet. Somit kann es passieren, dass der MPP-Scan anstelle eines Maximums der Leistung, nur eine unter dem Maximum befindliche Leistung findet (da einige Module abschalten) und daher das Solarzellenstack nicht am maximalen Leistungsarbeitspunkt (MPP) betrieben wird. Ist der Strom am Solarzellenstack zu hoch für einzelne Module, sodass sich nicht genügend Spannung aufbauen kann, dann bleiben diese Module deaktiviert, wobei die Module zumindest bis zum nächsten MPP-Scan inaktiv bleiben.

Es ist daher die Aufgabe der Erfindung, ein Solarzellenstack mit einer MLSD-Einheit sowie ein Verfahren zum Betreiben eines solchen Solarzellenstacks bereitzustellen, mit welchen der Solarzellenstack unabhängig von den Umweltbedingungen in einem möglichst optimalen Leistungsarbeitspunkt betrieben werden kann.

Die Aufgabe wird erfindungsgemäß mit den Merkmalen der unabhängigen Ansprüche 1 und 11 gelöst. Dadurch sind während der Ermittlung des Leistungsarbeitspunkts immer alle verfügbaren Module durch die jeweilige MLSD-Einheit zugeschaltet. Damit kann gewährleistet werden, dass die tatsächliche maximale Leistung des Solarzellenstacks ermittelt und dem Solarzellenstacks als Leistungsarbeitspunkt vorgegeben wird. Es kann daher verhindert werden, dass wegen allfälliger abgeschalteter Module fälschlicherweise eine geringere Leistung ermittelt und als Leistungsarbeitspunkt vorgegeben wird.

In einer vorteilhaften Ausführungsform können nach dem Ermitteln des Leistungsarbeitspunktes zusätzlich folgende Schritte durchgeführt werden: Verändern des elektrischen Regelparameters mittels des Wechselrichters auf einen vorgegebenen zweiten Wartewert, wobei der zweite Wartewert so festgelegt ist, dass der zweite Modulspannungsgrenzwert der Mehrzahl an Modulen überschritten wird; und Halten des elektrischen Regelparameters auf dem zweiten Wartewert für eine vorgegebene zweite Zeitspanne, sodass die Mehrzahl an Modulen durch die MLSD-Einheiten zugeschaltet wird. Das ist vorteilhaft, weil dadurch sichergestellt wird, dass alle Module durch Anlegen des zweiten Wartewerts wieder durch die MLSD-Einheit zugeschaltet werden. Somit kann das Solarzellenstack sofort mit allen aktiven Modulen nach der Bestimmung des Leistungsarbeitspunkts wieder in Betrieb gehen.

In einer weiteren vorteilhaften Ausführungsform kann als der elektrische Regelparameter ein Stackstrom verwendet werden, wobei ein festgelegter Stackstrom-Sollwert als der erste Wartewert verwendet wird und der Stackstrom-Sollwert vom ersten Wartewert auf den Parametergrenzwert erhöht wird. Damit kann dem Solarzellenstack ein Stromwert vorgegeben werden, auf dessen Basis sich die Spannung einstellt.

In einer weiteren Ausführungsform kann als der elektrische Regelparameter eine Stackspannung verwendet werden, wobei als erster Wartewert ein festgelegter Stackspannungswert-Sollwert verwendet wird und die Stackspannung vom ersten Wartewert auf den Parametergrenzwert verringert wird. Somit kann genau der Wert des ersten und zweiten Modulspannungsgrenzwertes eingestellt werden.

In einer weiteren vorteilhaften Ausführungsform kann der zweiten Zeitspanne ein anderer elektrischer Regelparameter verwendet werden, als in der ersten Zeitspanne. Somit kann beispielsweise zwischen Strom und Spannung als elektrische Parameter im erfindungsgemäßen Verfahren gewechselt werden. Das ist vorteilhaft, um beispielsweise den zweiten Modulspannungsgrenzwert über die Spannung als elektrischer Regelparameter einzustellen.

In einer weiteren vorteilhaften Ausführungsform kann die erste Zeitspanne über eine vordefinierte Zeitdauer oder in Abhängigkeit eines vom Wechselrichter an die MLSD-Einheiten übermittelten PLC-Signals oder durch den Zeitpunkt des Zuschaltens eines Moduls im Solarzellenstack definiert werden und/oder die zweite Zeitspanne über eine vordefinierte Zeitdauer oder in Abhängigkeit eines vom Wechselrichter an die MLSD-Einheiten übermittelten PLC-Signals definiert werden. Somit kann die erste und/oder die zweite Zeitspanne so kurz wie möglich eingestellt werden. Das ist vorteilhaft, weil dadurch das gesamte erfindungsgemäße Verfahren verkürzt werden kann und somit der Solarzellenstack am neuen Leistungsarbeitspunkt den Betrieb so schnell wie möglich wieder aufnehmen kann.

In einer weiteren vorteilhaften Ausführungsform kann die erste Zeitspanne und die zweite Zeitspanne gleich lang sein. Somit können die erste und die zweite Zeitspanne mittels der gleichen vordefinierten Zeitdauer und/oder einem PLC Signal gesteuert werden. Damit kann das erfindungsgemäße Verfahren weiters vereinfacht und verkürzt werden.

In einer weiteren vorteilhaften Ausführungsform kann der Parametergrenzwert abhängig von einem vorgegebenen Festwert oder einem Referenzwert festgelegt werden. Somit kann sichergestellt werden, dass der Leistungsarbeitspunkt an einer Spitze gefunden wird und das Solarzellenstack effektiv betrieben wird.

In einer weiteren vorteilhaften Ausführungsform kann als Referenzwert des Parametergrenzwerts ein Wert verwendet werden, der 30 - 60% der Stackspannung aus einem zeitlich vor dem MPP-Scan liegenden Bereich beträgt, vorzugsweise 50%. Das ist vorteilhaft, weil damit auf einem im vorhergehenden MPP-Scan definierten Leistungsarbeitspunkt Bezug genommen wird, welcher im vor dem MPP-Scan liegenden Bereich zum Regeln verwendet wird Somit kann ein neuer Leistungsarbeitspunkt noch effektiver gefunden werden

In einer weiteren vorteilhaften Ausführungsform kann nach dem Bestimmen des Leistungsarbeitspunkts ein MPP-Tracking durchgeführt werden, in welchem der ermittelte Leistungsarbeitspunkt in einem definierten Regelparameterbereich verändert wird, wobei der Regelparameterbereich vorzugsweise ±10% des ermittelte Leistungsarbeitspunkts beträgt. Folglich kann das MPP-Tracking nur kleine Verschiebungen des elektrischen Regelparameters bewirken, um auf Änderungen am Solarzellenstack während des Betriebs reagieren zu können. Das MPP-Tracking unterbricht, im Gegensatz zum MPP-Scan nicht die Stromproduktion, und kann daher vorteilhaft für Feinjustierungen des Leistungsarbeitspunkts sein.

In einer weiteren vorteilhaften Ausführungsform kann der Wechselrichter eine Steuereinheit enthalten, wobei der Wechselrichter ausgebildet ist, ein PLC-Signal an den Solarzellenstack zu senden. Das PLC Signal wird zum Einschalten und Abschalten der Module im Solarzellenstack verwendet und kann an die erste und zweite Zeitspanne gekoppelt werden. Somit kann das zu regelmäßigen Zeitpunkten gesendete PLC- Signal die erste und zweite Zeitspanne beenden, beispielsweise nach einer vorgegebenen Anzahl an Signalen.

In einer weiteren vorteilhaften Ausführungsform kann einer Mehrzahl an Solarzellenstacks über den Wechselrichter ein Leistungsarbeitspunkt vorgegeben werden. Der Wechselrichter kann über eine Anzahl an Eingängen verfügen und jeder Eingang ist mit einem Solarzellenstack verbunden. Somit kann erfindungsgemäßes Verfahren an einer Mehrzahl an Solarzellenstacks gleichzeitig ausgeführt werden. Je nach Zustand wird jedem Solarzellenstack dann ein Leistungsarbeitspunkt vorgegeben.

In einer weiteren vorteilhaften Ausführungsform kann das Solarzellenstack eine Anzahl von parallel geschalteten Strängen aufweisen, wobei jeder Strang eine Anzahl von seriell geschalteten Modulen aufweist. Somit kann das Solarzellenstack an einen Strombedarf angepasst werden, indem die Stränge im Solarzellenstack angepasst werden.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig. 1a eine schematische Solarkraftanalage,
Fig. 1b eine Schaltung eines Strangs mit einer Mehrzahl an Modulen,
Fig. 2 verschiedene beispielhafte Strom-Spannungs-Kennlinien von einzelnen Modulen des Solarzellenstacks,
Fig. 3 verschiedene beispielhafte Leistungs-Spannungs-Kennlinien von einzelnen Modulen,
Fig. 4 ein beispielhafter MPP-Scan aus dem Stand der Technik,
Fig. 5 einen erfindungsgemäßen MPP-Scan in einer bevorzugten Ausführungsform, und
Fig. 6 eine Kombination von MPP-Scan und MPP-Tracker zum Optimieren eines Leistungsarbeitspunk eines Solarzellenstacks.

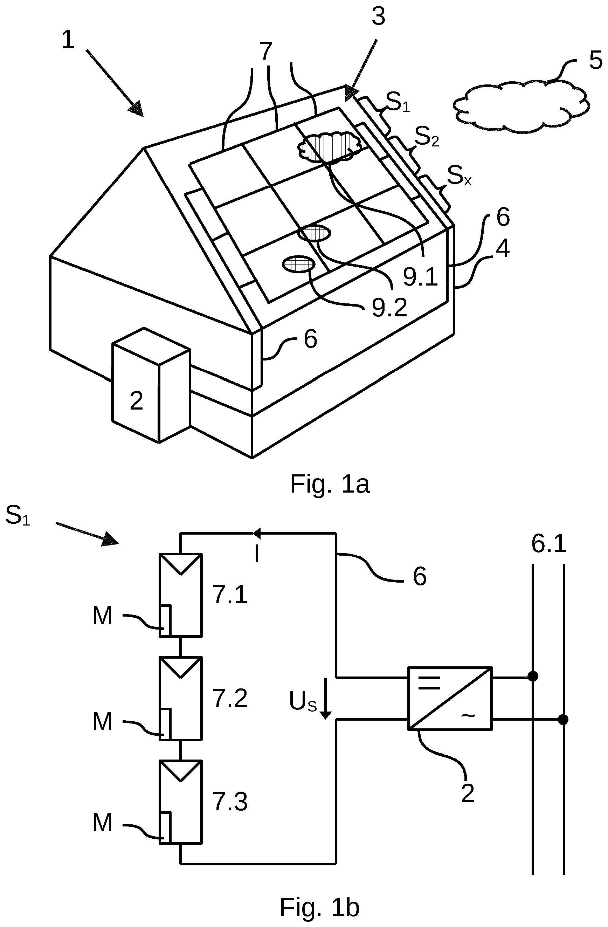

Fig. 1a zeigt eine schematische Solarkraftanlage 1 mit einem Solarzellenstack 3, der mehrere Stränge S₁, S₂, Sₓ aufweist. Fig. 1b zeigt ein entsprechendes Blockschaltbild eines Strangs S₁ des Solarzellenstacks 3 der Solarkraftanlage 1. In Fig. 1a ist das Solarzellenstack 3 auf dem Dach eines Gebäudes 4, beispielsweise einem Privathaus, einer Lagerhalle, oder einem Produktionsbetrieb angebracht. Ein Solarzellenstack 3 weist eine Mehrzahl an Modulen 7.i auf, welche zu zumindest einem Strang S in Serie geschaltet sein können. Es können auch eine Mehrzahl an Strängen S vorgesehen sein, die beispielsweise parallelgeschaltet werden können. In der Solarkraftanlage 1 ist weiters ein Wechselrichter 2 vorgesehen, der über elektrische Leitungen 6 mit den parallel geschalteten Strängen S₁, S₂, Sₓ verbunden ist. Die Module 7 beinhalten jeweils eine MLSD-Einheit M, welche in Fig. 1b dargestellt ist. Das Solarzellenstack 3, bzw. die jeweiligen Stränge S₁, S₂,...,Sₓ des Solarzellenstacks 3, sind mit dem Wechselrichter 2 verbunden, wobei dieser zumindest zweipolig über die Leitungen 6 angeschlossen ist. Im Regelfall hat jedes Solarzellenstack 3 einen separaten Eingang am Wechselrichter 2. So kann ein Wechselrichter 2 auch eine Mehrzahl an Solarzellenstacks 3 betreiben.

Je nach Tageszeit und Wetterbedingungen liefert das Solarzellenstack 3 eine unterschiedliche Stackleistung P_{S}. Beispielhaft ist eine Verschattung 9.1 oder Verschmutzung 9.2 des Solarzellenstacks 3 in Fig. 1a gezeigt. Verschattung 9.1 kann beispielhaft durch Bewölkung, wie durch eine Wolke 5 in Fig. 1a dargestellt, auftreten. Verschattung 9.1 kann aber auch durch Vegetation, wie Bäume, oder durch andere Gebäude während des Tagesverlaufs eintreten. Es ist auch möglich, dass Teile eines Moduls 7 verschmutzt sind, wie beispielsweise durch Schmutzflächen 9.2 in Fig.1a gezeigt. Die Verschmutzungen können beispielsweise natürlichen Ursprung haben, wie Pflanzenteile, Tierexkremente, es können aber auch anthropogen verursachte Verschmutzung, wie Feinstaub, Rußpartikel, und ähnliches für Schmutzflächen 9.2 verantwortlich sein.

Fig. 1b zeigt einen Strang S₁ eines Solarzellenstacks 3 mit drei Modulen 7.1, 7.2, 7.3. Die Module 7.1, 7.2, 7.3 enthalten, wie schon oben erwähnt, jeweils eine MLSD-Einheit M, welche zur sicherheitsbedingten Abschaltung des zugeordneten Moduls 7 eingebaut ist, und deren Funktion noch näher erläutert wird. Ein Strang S hat aber nicht notwendigerweise nur drei Module 7, sondern kann eine Anzahl an Modulen 7 enthalten, die für die Anwendung des Solarzellenstacks 3 nötig ist. Es kann auch möglich sein, dass ein Solarzellenstack 3 überhaupt nur aus einem einzelnen Strang S besteht. Das kann natürlich abhängig von der nötigen Nennspannung und vom nötige Nennstrom des Solarzellenstacks 3 sein. Beispielsweise könnte ein weiterer Strang S₂ mit weiteren drei Modulen 7 dem ersten Strang S₁ parallelgeschaltet werden. Die Stackspannung U_{S} ist dabei entsprechend für alle Stränge gleich, der gelieferte Strom kann pro Strang S unterschiedlich sein und am Eingang des Wechselrichters 2 fließt dann die Summe der einzelnen Ströme der Stränge S und ergeben einen Stackstrom I_{S}. Der Wechselrichter 2 kann an ein lokales Netz oder an das allgemeine Stromnetz 6.1 angebunden sein. Damit kann der produzierte Stackstrom I_{S} beispielsweise an das Gebäude 4 selbst abgegeben werden und Verbrauchern zugeführt werden, oder in das allgemeine Stromnetz 6.1 eingespeist werden. In Fig. 1a ist exemplarisch nur ein Eingang am Wechselrichter 2 gezeigt. Selbstverständlich kann ein Wechselrichter 2 auch eine Mehrzahl an Eingänge aufweisen.

Am Wechselrichter 2 liegt demnach eine Stackspannung U_{S} an, welche der Summe der Modulspannungen U_{M} (in Fig. 1b nicht gezeigt) der in Serie geschalteten Module 7 entspricht. Je mehr Module 7.i parallel vorhanden sind (auch in Form von parallelen Strängen S), desto höher ist der produzierte Nennstrom der Solarkraftanlage 1.

Der Wechselrichter 2 weist eine (nicht dargestellte) Steuereinheit auf, welche beispielsweise als mikroprozessorbasierte Hardware, beispielsweise als Computer, Mikrocontroller, Digital Signal Processor (DSP), speicherprogrammierbare Steuerung (SPS) usw., implementiert sein kann, auf der entsprechende Steuerungsprogramme zur Umsetzung der jeweiligen Funktion laufen. Auch eine Ausführung als integrierter Schaltkreis, wie z.B. als Anwendungsspezifische integrierte Schaltung (ASCI) oder Field Programmable Gate Array (FPGA), ist denkbar. Der vom Solarzellenstack 3 produzierte Gleichstrom wird vom Wechselrichter 2 in Wechselstrom umgewandelt. Pro Eingang des Wechselrichters 2 (also pro Solarzellenstack 3) erfolgt eine sogenannte Leistungsarbeitspunkt (Maximum-Power-Point-MPP)-Regelung, sodass ein Maximum an Stackleistung P_{S} produziert werden kann. Die Ermittlung der maximalen Stackleistung P_{S} erfolgt dabei mittels eines später näher erklärten MPP-Trackings 19.

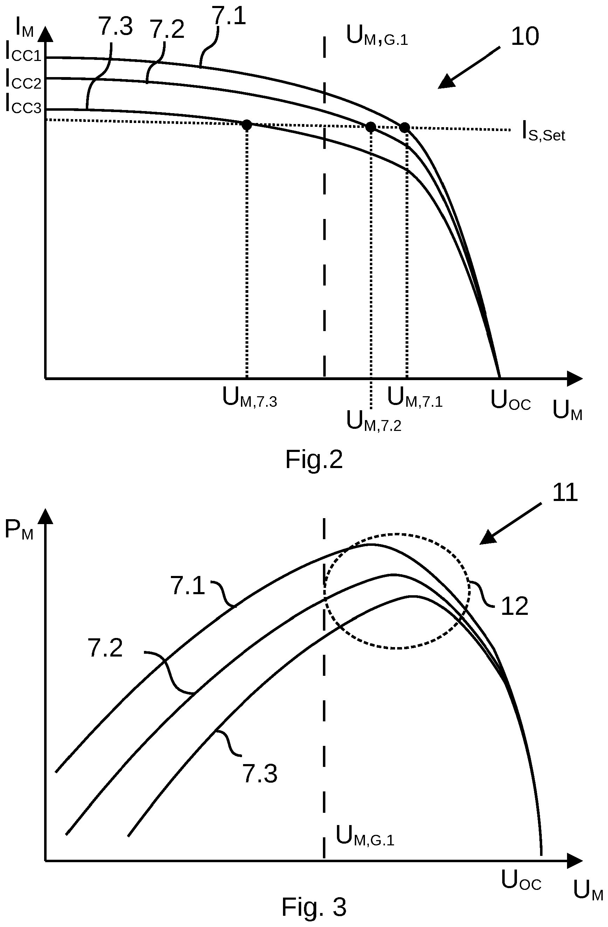

Die Verschmutzungen 9.1 und Verschattungen 9.2 haben zur Folge, dass einzelne Module 7.i nicht oder nur eingeschränkt funktionstüchtig sind und haben somit Auswirkungen auf die photovoltaisch produzierte Stackspannung U_{S} und den Stackstrom I_{S} des Solarzellenstacks 3. Alle oben beschrieben Effekte haben, neben produktionsbedingten Unterschieden in den Modulen 7.i, Auswirkungen auf die in Fig. 2 beispielhaft dargestellten Strom-Spannungskennlinien 10 der einzelnen Module 7.1, 7.2, 7.3. Die MPP-Regelung hat dabei die Aufgabe, den Punkt maximaler Leistung - den Leistungsarbeitspunkt MPP - eines Solarzellenstacks 3 zu finden. Vorteilhafterweise kann der jeweilige Leistungsarbeitspunkt MPP bei mehreren Solarzellenstacks 3 in einer Solarkraftanlage 1 auch parallel gefunden werden. Das erfolgt während eines MPP-Scans.

Fig. 2 zeigt die Strom-Spannungskennlinien 10 der Module 7.1, 7.2, 7.3 des Strangs S₁ des Solarzellenstacks 3. Auf der Abszisse ist die Modulspannung U_{M} aufgetragen, während auf der Ordinate der Modulstrom I_{M} aufgetragen ist. Für Anwendungen zur Stromerzeugung in der Photovoltaik ist nur der erste Quadrant des kartesischen Koordinatensystems der Strom-Spannungskennlinie 10 interessant und wird daher mittels MPP-Scans aufgezeichnet. Bei einer Modulspannung U_{M}=0 weist jedes Modul 7.1, 7.2, 7.3 einen Kurzschlussstrom ICC₁, ICC₂, ICC₃ (closed circuit current = I_{cc}) auf und bei und bei einem Modulstrom I_{M} =0 weist jedes Modul eine Leerlaufspannung U_{OC1}-U_{OC3} (nur als open circuit voltage = U_{oc} in Fig. 2 und 3 gezeigt) auf.

In Fig. 2 sind die Strom-Spannungskennlinien 10 des ersten Moduls 7.1, des zweiten Moduls 7.2 und des dritten Moduls 7.3 dargestellt. Vorteilhafterweise können das die drei Module des Strangs S₁ sein, wie in Fig. 1b gezeigt wird. Der Strang S₁ kann hier auch gleichzeitig das gesamte Solarzellenstack 3 darstellen. Die Strom-Spannungskennlinien 10 der Module 7.1, 7.2, 7.3 unterscheiden sich hauptsächlich im Bereich mit Nähe zum jeweiligen Kurschlussstrom ICC₁, ICC₂, ICC₃ pro Modul 7.1, 7.2, 7.3. Exemplarisch ist ein Stackstrom-Sollwert I_{S,set} nahe der Kurschlussströme ICC₁, ICC₂, ICC₃ dargestellt. Durch die Unterschiede, vor allem im sehr flachen Steigungsbereich in den Strom-Spannungskennlinien 10, resultiert der Stackstrom-Sollwert I_{S,set} in drei stark unterschiedlichen Modulspannungen U_{M,7.1}, U_{M,7.2}, U_{M,7.3} für die Module 7.1, 7.2, 7.3. Dies zeigt, dass die einzelnen Module 7.1, 7.2, 7.3 bei gleichem Stackstrom I_{S} ein unterschiedliches Verhalten in Form unterschiedlicher Strom-Spannungskennlinien 10 haben.

Die Module 7.1, 7.2, 7.3 haben, wie in Fig. 1b dargestellt, jeweils eine MLSD-Einheit M welche die Modulspannung U_{M} des zugeordneten Moduls überwachen. Die MLSD-Einheiten M können die Module 7.1, 7.2, 7.3 sowohl einschalten als auch abschalten. Ein solches Ab- bzw. Einschalten hat daher Auswirkungen auf den MPP-Scan.

MLSD Einheiten M verursachen eine Abschaltung eines Moduls 7.1, 7.2, 7.3 sobald die Modulspannung U_{M} des jeweiligen Moduls einen ersten Modulspannungsgrenzwert U_{M,G.1} unterschreitet, der beispielsweise 8 VDC (Volt-Gleichspannung) betragen kann. Der Wechselrichter 2 hat auf eine derartige Abschaltung keinen Einfluss. Während im Beispiel gemäß Fig. 2 die Modulspannungen U_{M,7.2} und U_{M,7.1} bei dem dargestellten Stackstrom-Sollwert I_{S,set} über diesem ersten Modulspannungsgrenzgrenzwert U_{M,G.1} liegen, liegt die Modulspannung U_{M,7.3} bereits darunter, sodass die MLSD Einheit M des Moduls 7.3 das Modul 7.3 abgeschaltet hat. Die MLSD Einheit M ist bevorzugt an jedem Modul 7.i montiert, sodass auch jedes Modul 7.i individuell abgeschaltet bzw. zugeschaltet werden kann. Eine Kommunikation mit dem Wechselrichter 2 erfolgt bevorzugt per Power-Line-Communication (PLC) Signal über die Leitungen 6. Die Strom-Spannungskennlinien 10 sind, wie oben erwähnt, abhängig von mehreren Faktoren während des Betriebs. Folglich kann in einem nachfolgenden MPP-Scan - bei welchem der Stackstrom I_{S} und/oder die Stackspannung U_{S} als elektrische Parameter Pi verändert werden - zusätzlich ein anderes Modul 7.i, unterschiedlich zum dritten Modul 7.3 im Beispiel, den ersten Modulspannungsgrenzgrenzwert U_{M,G.1} unterschreiten.

Fig. 3 zeigt exemplarisch die korrespondierende Spannungs-Leistungskennlinie 11 der Module 7.1, 7.2, 7.3, beispielhaft im Strang S₁ in der Fig. 1b angeordnet. Auf der Abszisse ist die Modulspannung U_{M} aufgetragen, während auf der Ordinate die Modulleistung P_{M} aufgetragen ist. Die maximale Stackleistung P_{S} des gesamten Solarzellenstacks 3 befindet sich in einem Maximalbereich 12 nahe der Leerlaufspannung U_{oc} und entsprechend über dem ersten Modulspannungsgrenzwert U_{M,G.1.} Vorteilhafterweise kann über die einzelnen Spannungs-Leistungskennlinie 11 der Module 7.i eine gesamte Spannungs-Leistungskennlinie des Solarzellenstacks 3 errechnet werden. Der MPP-Scan basiert auf der Variation des Stackstroms I_{S} und/oder der Stackspannung U_{S} des Solarzellenstacks 3 und dient dazu, einen optimalen Leistungsarbeitspunkt MPP im Maximalbereich 12 der Spannungs-Leistungskennlinien 11 des Solarzellenstacks 3 festzulegen (nicht gezeigt). Bei einem MPP-Scan wird der Leistungsarbeitspunkt MPP auf der Spannungs-Leistungskennlinie 11 über eine Variation des Stackstroms I_{S} und/oder der Stackspannung U_{S} bewegt. Wird entsprechend ein erster Modulspannungsgrenzwert U_{M,G.1} unterschritten, wird das entsprechende Modul 7.i durch die entsprechende MLSD-Einheit M abgeschaltet.

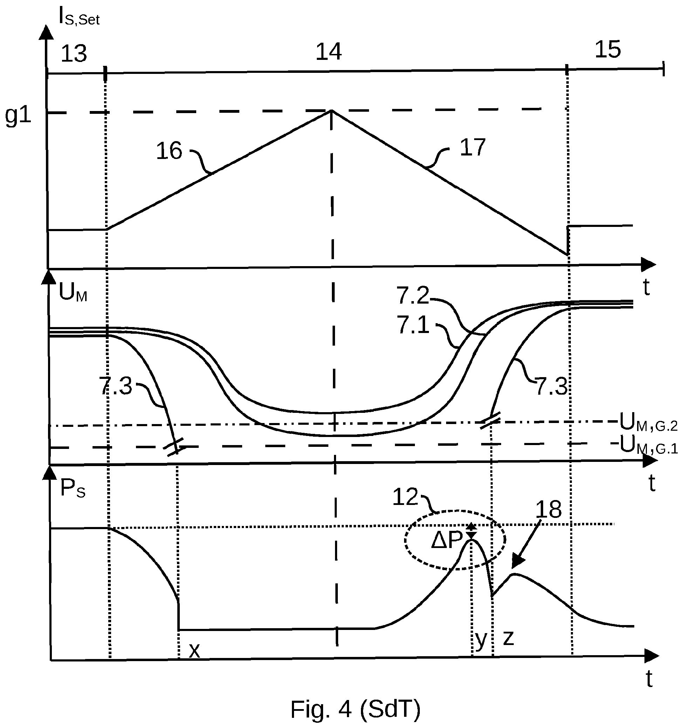

Fig. 4 zeigt den Verlauf eines MPP-Scans für die beschriebenen Module 7.1, 7.2, 7.3 des Solarzellenstacks 3, wie er beispielsweise im Stand der Technik ausgeführt wird. Auf der Abszisse ist die Zeit t aufgetragen und auf der Ordinate der Stackstrom-Sollwert I_{S,set}, die Modulspannungen U_{M} der einzelnen Module 7.i und die Stackleistung P_{S}. Vor dem MPP-Scan gibt der Wechselrichter 2 einen (beispielsweise in einem vorherigen MPP-Scan ermittelten) Leistungsarbeitspunkt MPP im Bereich 13 vor, in dem der Solarzellenstacks 3 einen bestimmten Stackstrom I_{S} und eine bestimmte Stackspannung U_{S} aufweist. In Bereich 13 sind alle Module 7.1, 7.2, 7.3 aktiv und tragen zur Stackleistung P_{S} des Solarzellenstacks 3 bei. Bei einem Leistungsarbeitspunkt MPP können auch einzelne Module 7.i inaktiv sein, wenn dadurch die Stackleistung P_{S} in diesem Zyklus maximiert wird. Beispielweise kann ein Modul 7.i verschattet sein und ist daher in diesem Zyklus inaktiv - also beispielsweise von der MLSD-Einheit M abgeschaltet. Es ist auch vorstellbar, dass ein Modul 7.i defekt ist und daher permanent deaktiviert wird. Zur Veranschaulichung sind in Fig. 4 im Bereich 13 alle drei Module 7.1, 7.2, 7.3 aktiv. Auf den Bereich 13 folgt ein Variationsbereich 14, in welchem der MPP-Scan stattfindet. Die Modulspannungen U_{M} sind im Bereich 13 leicht unterschiedlich, wie auf Basis der Strom-Spannungskennlinien 10 in Fig. 2 ersichtlich ist. Die Summe der einzelnen Modulspannungen U_{M} ergibt dann eine Stackspannung U_{S} (hier nicht gezeigt).

Zur Durchführung des MPP-Scans wird ein festgelegter elektrischer Regelparameter Pi des Solarzellenstacks 3 variiert, wobei in Fig. 4 beispielhaft der Stackstrom I_{S} als Regelparameter Pi verwendet wird. Dabei wird der Stackstrom I_{S} variiert, also galvanostatisch auf einen definierten Stackstrom-Sollwert I_{S,set} geregelt. Es ist aber auch eine Regelung über eine Stackspannung U_{S} als elektrischer Regelparameter Pi denkbar, also eine potentiostatische Regelung auf einen definierten Stackspannungs-Sollwert U_{S,Set}. Der Stackstrom-Sollwert I_{S,set} wird im Variationsbereich 14 zuerst mittels einer ersten vorgegebenen Rampe 16 erhöht. Der Stackstrom-Sollwert I_{S,set} kann in der ersten Rampe 16 beispielsweise solange erhöht werden, bis die generell sinkenden Modulspannungen U_{M} (bzw. auch die errechnete bzw. gemessene Stackspannung U_{S}) ausgehend von dem bestimmten Wert als Referenzwert der Stackspannungs U_{S} in Bereich 13 auf ihren halben Wert gesunken ist. Der zu diesem Zeitpunkt erreichte Stromwert bildet einen Parametergrenzwert g1. Da im Solarzellenstack 3 mehrere Module 7.1, 7.2, 7.3 in Serie geschaltet sind, fließt durch alle Module 7.1, 7.2, 7.2 der gleiche Stackstrom-Sollwert I_{S,Set}. Die Modulspannung U_{M} kann jedoch für jedes Modul 7.1, 7.2, 7.3 unterschiedlich sein, wie im Spannungsverlauf in Fig. 4 dargestellt wird. Der Parametergrenzwert g1 kann auch auf andere Weise bestimmt werden oder auch als ein vor den MPP-Scans festgelegter Grenzwert des elektrischen Regelparameters Pi angegeben sein.

So können die Modulspannungen U_{M} der Module 7.1, 7.2 beispielsweise bis zum halben Wert der Modulspannungen U_{M} (aus dem Bereich 13 eruiert) im Bereich 14 absinken, welche aber noch immer über den ersten Modulspannungsgrenzwerten U_{M,G.1} der MLSD-Einheiten M im Normbetrieb liegen können. Das dritte Modul 7.3 unterschreitet den ersten Modulspannungsgrenzwert U_{M,G.1} (wie schon in Fig. 2 auch erkennbar ist) und wird zum Zeitpunkt x durch die zugehörige MLSD-Einheit M abgeschaltet. Das kann beispielsweise Aufgrund von Verschmutzung oder Verschattung des dritten Moduls 7.3, wie oben beschrieben, passieren. Dementsprechend resultiert beim Abschalten des dritten Moduls 7.3 auch ein Verlust der Stackleistung P_{S}, wie zum Zeitpunkt x ersichtlich ist. Die sprunghafte Verringerung der Strackleistung P_{S} ist am Zeitpunkt x beim Abschalten des dritten Moduls 7.3 dargestellt.

Nach Erreichen des Parametergrenzwerts g1 des Stackstrom-Sollwerts I_{S,set} wird im Variationsbereich 14 der Stackstrom-Sollwert I_{S,set} wieder mittels einer zweiten vorgegebenen Rampe 17 verringert. Dieses Verringern des Stackstrom-Sollwerts I_{S,set} kann bis zum halben Wert des Stackstrom-Sollerts I_{S,sat} aus dem Bereich 13 erfolgen. Generell kann der Stackstrom I_{S} auch auf einen definierten Festwert gesteuert (in der zweiten vorgegebenen Rampe 17 verringert) werden. Dabei erhöht sich die Stackleistung P_{S} wieder und erreicht im Wesentlichen vor dem Erreichen des Endwerts der Rampe 17 des Stackstrom-Sollwerts I_{S,set} ihren Maximalbereich 12, in welchem der Leistungsarbeitspunkt MPP liegt und in diesem Maximalbereich 12 ermittelt wird.

Wie in Fig. 4 deutlich wird, ist das dritte Modul 7.3 nicht während des gesamten MPP-Scans aktiv, sodass das dritte Modul 7.3 bei der Ermittlung der Stackleistung P_{S} im Maximalbereich 12 des Variationsbereichs 14 (auch in Fig. 3 ersichtlich) nicht berücksichtigt wird. Der Leistungsarbeitspunkt MPP wird daher zum Zeitpunkt y festgelegt, da hier die maximale Stackleistung P_{S} resultiert - diese ist entsprechend aufgrund des fehlenden Moduls 7.3 geringer als im Bereich 13, was mit der Leistungsdifferenz ΔP gezeigt wird. Die Leistungsdifferenz ΔP ist abhängig von der Anzahl der aktiven Module (7.1, 7.2) und inaktiven Module (7.3) und kann daher positive oder negative Werte der Stackleistung P_{S} annehmen. In Fig. 4 ist nur eine Spitze bzw. Hügel dargestellt, sodass diese Spitze den aktuellen Leistungsarbeitspunkt MPP darstellt. Sollten eine Mehrzahl an Spitzen im Maximalbereich 12 beim MPP-Scan resultieren, wird im Stand der Technik die höchste Spitze für den Leistungsarbeitspunkt MPP verwendet. Wie aus dem Beispiel in Fig. 4 ersichtlich ist, führt das allerdings zu Nachteilen in der Bestimmung des Leistungsarbeitspunkts MPP, da hier nicht alle Module 7.i zugeschaltet sind (im Beispiel ist Modul 7.3 inaktiv), welche damit nicht berücksichtigt werden. Eine Spitze bzw. Hügel kann beispielsweise über die erste Ableitung der Stackleistung P_{S} über die Zeit t bestimmt werden.

Nach Abschalten des dritten Moduls 7.3 zum Zeitpunkt x dauert es eine gewisse Zeit (beispielsweise einige Sekunden), bis die Modulspannung U_{M,7.3} des dritten Moduls 7.3 einen zweiten Modulspannungsgrenzgrenzwerts U_{M,G.2} zum Zeitpunkt z überschreitet, bei welchem das dritte Modul 7.3 wieder zuschaltet. Die Erhöhung der Modulspannung U_{M,7.3} des dritten Moduls 7.3 ist darauf zurückzuführen, dass der Stackstrom-Sollwert I_{S,set} im Variationsbereich 14 an der Rampe 17 verringert wird, wodurch aufgrund des Zusammenhangs der Strom-Spannungskennlinie (Fig. 2) die Modulspannung U_{M} steigt. Dieses Zuschalten kann auch abhängig von einem PLC-Signal des Wechselrichters 2 (oder einer im Wechselrichter integrierten Steuereinheit) sein, was unter Umständen zu einer weiteren Verzögerung des Zuschaltens führen kann. Ein Zuschalten des dritten Moduls 7.3 außerhalb des Variationsbereichs 14 hat keinen Einfluss auf den MPP-Scan und die Bestimmung des Leistungsarbeitspunkts MPP, auch wenn es zu einer Leistungsspitze 18 zum Zeitpunkt z kommt. Jedoch wird das dritte Modul 7.3 nicht bei der Berechnung des Leistungsarbeitspunkts MPP berücksichtigt.

Auf den Variationsbereich 14 folgt ein sogenannter MPP-Tracking-Bereich 15, in welchem der aktuelle Leistungsarbeitspunkt MPP (im zuvor mittels des MPP-Scans ermittelten Maximalbereich 12) eingestellt und das Solarzellenstack 3 auf Basis dieses aktuellen Leistungsarbeitspunkts MPP geregelt wird, bis der nächste MPP-Scan durchgeführt wird. Die vorgegebenen Rampen 16, 17, wie in Fig. 4 gezeigt, sind nur exemplarisch und können auch unterschiedlich ausgestaltet sein und sind daher nicht zwingend symmetrisch. Die Steigung der Rampen 16, 17 kann auch derart gewählt werden, dass diese einen Sprung darstellen. Vorteilhafterweise kann ein MPP-Scan nicht nur für ein einzelnes Solarzellenstack 3 durchgeführt werden, sondern auch für eine Mehrzahl an Solarzellenstacks 3. Besonders vorteilhaft werden alle Solarzellenstacks 3 gleichzeitig vom Wechselrichter 2 mittels MPP-Scans abgetastet, um gleichzeitig und unabhängig jeweils einen Leistungsarbeitspunkt MPP eines jeden Solarzellenstacks 3 zu ermitteln.

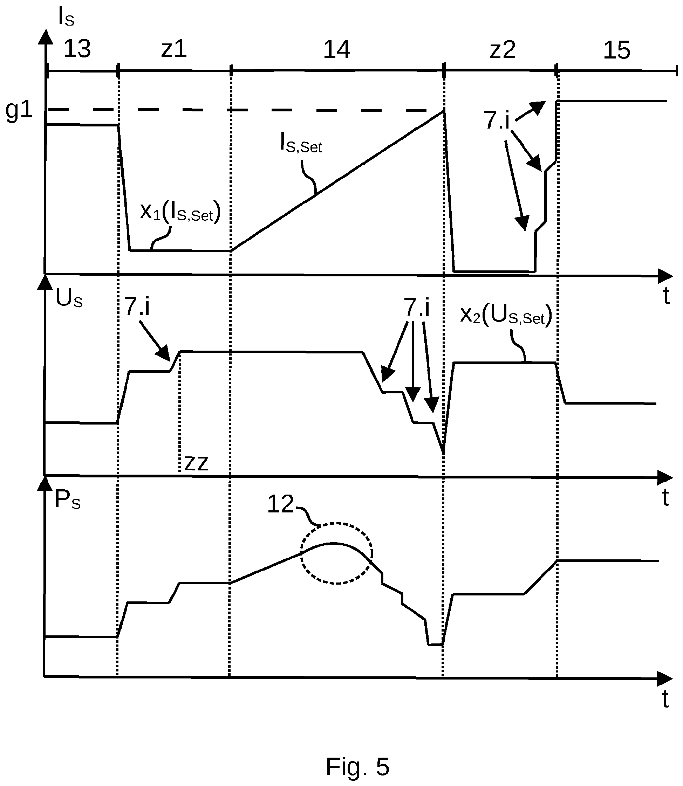

Es ist auch beispielsweise denkbar, dass zu einem definierten Startwert eines elektrischen Parameters Pi der MPP-Scan initialisiert wird, welcher abweichend zum letzten vorgegeben Leistungsarbeitspunkt MPP im Bereich 13 ist. Je nach Ausgestaltung eines MPP-Scans kann es auch passieren, dass zuvor deaktivierte Module 7.i zu Beginn des MPP-Scans deaktiviert sind und erst in späterer Folge zuschalten. Vorteilhafterweise wechseln sich im Betrieb des Solarzellenstacks 3 der MPP Scan und ein MPP Tracking periodisch ab. Das MPP-Tracking ist dabei aber über einen längeren Zeitraum aktiv, beispielsweise 10 - 30 min, während ein MPP-Scan nur wenige Sekunden bis Minuten dauern kann. Die oben beschrieben Probleme beim MPP-Scan, also dass bei der Bestimmung des Leistungsarbeitspunkts MPP einzelne Module 7.i aufgrund der Abschaltung durch die MLSD-Einheiten M nicht aktiv sind, werden durch das erfindungsgemäße Verfahren gelöst, das nachfolgend anhand Fig. 5 näher erläutert wird.

Fig. 5 zeigt eine beispielhafte Ausführungsform des erfindungsgemäßen MPP-Scans. Auf der Abszisse ist die Zeit t aufgetragen, während auf Ordinate Stackstrom I_{S}, Stackspannung U_{S} und Stackleistung P_{S} aufgetragen sind. Wie bereits erwähnt kann für den erfindungsgemäßen MPP-Scan sowohl der Stackstrom I_{S}, als auch die Stackspannung U_{S} als elektrischer Regelparameter Pi verwendet werden. Die Stackspannung U_{S} ist wie oben erwähnt die Summe aller Modulspannungen U_{M} der Module 7.i des Solarzellenstacks 3. Zur leichteren Verständlichkeit des Verfahrens wird in Fig.5 auf die Auftragung der einzelnen Modulspannungen U_{M} verzichtet und es ist nur die (gesamte) Stackspannung U_{S} dargestellt.

Es ist auch möglich die elektrischen Regelparameter Pi (also Spannung oder Strom als Sollwert), während des MPP-Scans zu ändern, also beispielsweise zwischen der Regelung über den Stackstrom I_{S} und über die Stackspannung U_{S} zu wechseln, was auch anhand der beispielhaften Ausführungsform in Fig. 5 weiter unten noch näher erläutert wird. Es ist auch denkbar, dass die Stackleistung P_{S} als elektrischer Parameter Pi zur Regelung verwendet wird.

Im Bereich 13 ist jeweils noch der Leistungsarbeitspunkt MPP des vorigen Zyklus mit einem bestimmten Stackstrom-Sollwert I_{S,set} und einer bestimmten Stackspannung U_{S} vorgegeben. Der elektrische Regelparameter Pi wird in einem ersten Schritt auf einen vorgegebenen ersten Wartewert x1 zu Beginn der ersten Zeitspanne z1 verändert. Wenn als Regelparameter Pi der Stackstrom I_{S} verwendet wird, kann die Veränderung beispielweise durch die Reduktion des Stackstrom-Sollwerts I_{S,set} ausgeführt werden. Wenn als Regelparameter Pi die Stackspannung U_{S} verwendet wird, kann die Veränderung beispielweise durch die Erhöhung der Stackspannung-Sollwerts U_{S,Set} ausgeführt werden.

Die Reduktion des Stackstroms I_{S} erfolgt beispielsweise auf den halben Wert des Stackstroms I_{S}, welcher in Bereich 13 angelegt war. Falls schon ein MPP-Scan vor dem Bereich 13 durchgeführt worden ist, kann das der Wert des vorher bestimmten Leistungsarbeitspunkts MPP sein. Es ist aber auch vorstellbar, dass der erste Wartewert x1 als Festwert vorgegeben ist.

Bei einer Stackspannung U_{S} als Regelparameter Pi, kann dementsprechend der Stackspannungs-Sollwert U_{S,set} (hier nicht gezeigt in der Zeitspanne z1), auf einen den halben Wert der Stackspannung U_{S} aus dem Bereich 13, oder ebenfalls auf einen vorgegeben Festwert reduziert werden. Nach der Veränderung des Regelparameters Pi auf den ersten Wartewert x1 wird der elektrische Regelparameter Pi für eine erste Zeitspanne z1 auf dem Wartewert x1 gehalten. Durch die Reduktion des Stackstrom-Sollwerts I_{S,set} auf den Wartewert x1 ergibt sich, dass die Stackspannung U_{S} sich auf Basis der Strom-Spannungskennlinie 10 einstellt, sich also erhöht. Die erhöhte Stackspannung U_{S} bewirkt, dass der zweite Modulspannungsgrenzwert U_{M,G.2} der Mehrzahl an Modulen 7 überschritten wird. Erfindungsgemäß wird dadurch gewährleistet, dass alle deaktivierten Module 7.i über die MLSD-Einheiten M in dieser ersten Zeitspanne z1 zuschalten werden, wie auch zum Zeitpunkt zz ersichtlich ist. Durch das Zuschalten des Moduls 7.i wird also die dargestellte Stackspannung U_{S} und Stackleistung P_{S} sprunghaft erhöht.

Der zweite Modulspannungsgrenzwert U_{M,G.2} ist also relevant für das Zuschalten der Module 7.i mittels der zugehörigen MLSD-Einheit M und der erste Modulspannungsgrenzwert U_{M,G.1} für das Abschalten der Module 7.i. Demnach kann der zweite Modulspannungsgrenzwert U_{M,G.2} höher als der erste Modulspannungsgrenzwert U_{M,G.1} sein, damit ein Modul 7.1 erst bei relativ geringer Modulspannung U_{M} abschaltet, also möglichst spät abgeschaltet wird. Der zweite Modulspannungsgrenzwert U_{M,G.2} ist ausgebildet, um beim Zuschalten des Moduls 7.1 über die MLSD-Einheit M zu gewährleisten, dass die Stackspannung U_{S} ausreichend hoch für eine längere aktive Phase im Betrieb ist. Es ist aber auch vorstellbar, dass der zweite Modulspannungsgrenzwert U_{M,G.2} und der erste Modulspannungsgrenzwert U_{M,G.1} gleich groß sind. Es kann natürlich sein, dass es auch permanent inaktive Module 7.i gibt, welche defekt sind. Diese können daher nicht in der ersten Zeitspanne z1 zugeschaltet werden.

Vorteilhafterweise wird die erste Zeitspanne z1 durch einen Zeitablauf automatisch beendet, beispielsweise nach einer Sekunde. Es kann aber auch möglich sein, dass die erste Zeitspanne z1 erst beendet wird, wenn alle aktivierbaren Module 7.i auch aktiv sind. Das kann beispielweise über ein PLC-Signal vom Wechselrichter 2 kontrolliert werden. Der Wechselrichter 2 kann dann beispielsweise die erste Zeitspanne z1 in Abhängigkeit des gesendeten PLC-Signals beenden. Somit kann beispielsweise ein PLC-Signal alle Sekunden gesendet werden, wobei dann die Zeitspanne z1 nach dem PLC Signal endet, sobald alle Module 7.1 aktiv sind. Somit kann die erste Zeitspanne z1 länger als eine Sekunde andauern.

Nach der ersten Zeitspanne z1 startet der MPP-Scan im Variationsbereich 14. Dazu erfolgt im Variationsbereich 14 eine Veränderung des elektrischen Regelparameters Pi mittels des Wechselrichters 2 auf den vorgegebenen Parametergrenzwert g1 (der beispielsweise dem halben Wert aus dem Bereich 13 betragen kann, wie anhand Fig. 4 erläutert wurde). Wenn der Stackstrom I_{S} als elektrischer Regelparameter Pi verwendet wird, dann wird der Stackstrom-Sollwert I_{S,Set} erhöht. Wird die Stackspannung U_{S} als elektrischer Regelparameter Pi verwendet, dann wird Stackspannungs-Sollwert U_{S,Set} verringert. Der elektrische Regelparameter Pi kann beispielweise wie in Fig. 5 gezeigt, linear als Rampe ausgestaltet sein, es sind aber auch andere Verläufe, die der Fachmann als geeignet erachtet, denkbar. Es kann auch möglich sein, den elektrischen Regelparameter Pi beispielsweise stufenweise zu verändern.

Der Parametergrenzwert g1 kann beispielsweise nahe am Kurschlussstrom I_{cc} sein. Beispielweise kann es auch möglich sein den Parametergrenzwert g1 als einen Festwert vorzugeben, welcher beispielsweise durch den Fachmann definiert ist. Der Festwert kann beispielsweise die Hälfte der maximal zulässigen Spannung an einem Modul 7.i betragen. Vorteilhafterweise kann auch ein, in einem vorigen MPP-Scan ermittelter Leistungsarbeitspunkt MPP als Referenzwert verwendet werden. Der Parametergrenzwert g1 kann als die Hälfte des Referenzwerts darstellen werden. Somit kann der Parametergrenzwert g1 die Hälfte des Wertes der Stackspannung U_{S} aus dem Bereich 13 sein. Es kann auch möglich sein, dass ein MPP-Scan unter Testbedingungen (beispielsweise nach Produktion ohne Verschattung 9.1 oder Verschmutzung 9.2) als Referenzwert genommen wird. Damit kann der Parametergrenzwert g1 an den jeweiligen Referenzwert angepasst werden.

Wie in Fig. 5 dargestellt, wird also im Variationsbereich 14 der Stackstrom-Sollwert I_{S,Set} erhöht, beispielsweise solange, bis die Stackspannung U_{S} ihren halben Wert vom Bereich 13 erreicht hat. Der steigende Stackstrom-Sollwert I_{S,Set} bewirkt gemäß Strom-Spannungskennlinie 10 aus Fig. 2, dass die Stackspannung U_{S} sinkt. Abhängig von den einzelnen Strom-Spannungskennlinien 10 der Module 7.i wird der erste Modulspannungsgrenzwert U_{M,G.1} von den Modulen 7.1 gegebenenfalls zu unterschiedlichen Zeitpunkten unterschritten, sodass entsprechen die MLSD-Einheiten M in den Modulen 7.i zu unterschiedlichen Zeitpunkten abschalten. Dies ist an den sprunghaften Änderungen der Stackspannung U_{S} und der Stackleistung P_{S} am Ende des Variationsbereichs 14 dargestellt.

Der Leistungsarbeitspunkt MPP wird im erfindungsgemäßen Verfahren, konträr zum Stand der Technik, im ersten Teil des Variationsbereichs 14 des steigenden Stackstrom-Sollwerts I_{S,Set} ermittelt, da hier entsprechend der Strom-Spannungskennlinie 10 in Fig. 2 auch die Stackspannung U_{S} (bzw. die Modulspannungen U_{M}) noch hoch ist und somit der Leistungsarbeitspunkt MPP im Maximalbereich 12, welcher auch in Fig. 5 eingezeichnet ist, ist. Somit wird der Leistungsarbeitspunkt MPP an der Spitze bzw. dem Maximum der Stackleistung P_{S} bestimmt. Es wird also zunächst aus den im Variationsbereich 14 ermittelten Strom-Spannungskennlinien 10 die maximale Stackleistung P_{S} des Solarzellenstacks 3 ermittelt und diese maximale Stackleistung P_{S} wird dem Solarzellenstack 3 (vom Wechselrichter 2) danach im nachfolgenden MPP-Tracking-Bereich 15 als neuer Leistungsarbeitspunkt MPP vorgegeben. Die Dauer des Variationsbereichs 14 ist so gewählt, dass idealerweise während des MPP-Scans keine oder so wenig Module 7.i wie möglich durch deren jeweilige MLSD-Einheit M abgeschaltet werden. Das kann natürlich auch abhängig vom gewählten Parametergrenzwert g1 sein. Je näher dieser am Kurzschlussstrom I_{CC} der einzelnen Module 7.i gewählt ist, desto mehr Module 7.i werden während des Variationsbereichs 14 abschalten. Vorteilhafterweise kann die Zeitdauer des Variationsbereichs 14 mit jedem MPP-Scan angepasst werden.

Durch das erfindungsgemäße Verfahren wird im Variationsbereich 14 der elektrische Regelparameter Pi derart verändert, dass die Strom-Spannungskennlinie 10 gemäß Fig. 2 von der Leerlaufspannung U_{OC} in Richtung Kurzschlussstrom I_{CC} gescannt wird. Im Ausführungsbeispiel in Fig. 5 wird daher mit einem niedrigen Stackstrom I_{S} und einer hohen Stackspannung U_{S} gestartet. Grundsätzlich könnte der MPP-Scan aber auch in der umgekehrten Richtung vom Kurzschlussstrom I_{CC} in Richtung der Leerlaufspannung U_{OC} erfolgen. Demnach wird (wie bereits erwähnt) in einer ersten Phase des Variationsbereichs 14 der für den Leistungsarbeitspunkt MPP wichtige Maximalbereich 12 ermittelt, da in diesem Maximalbereich 12 auch das Maximum der Stackleistung P_{S} zu finden ist, wie in Fig.5 beispielhaft im zeitlichen Verlauf der Stackleistung P_{S} dargestellt ist. Dadurch, dass in diesem Variationsbereich 14 alle (außer die defekten) verfügbaren Module 7.i aktiv sind, kann der Leistungsarbeitspunkt MPP im Vergleich zum Stand der Technik verlässlich ermittelt werden. Das ist darauf zurückzuführen, dass in der Zeitspanne z1 vor dem MPP-Scan sichergestellt wird, dass alle Module 7.1 über deren MLSD-Einheiten M zugeschaltet sind.

Die Ermittlung des Leistungsarbeitspunkt MPP kann mittels Extremwertaufgabe erfolgen, sodass die Spitze bzw. das Maximum gefunden wird. Die Spannungs-Leistungskennlinien 11 können in einfacher Form über die Strom-Spannungskennlinien 10 errechnet werden. Der so ermittelte Leistungsarbeitspunkt MPP des Solarzellenstacks 3 wird nun für den an den Variationsbereich 14 anschließenden zweiten Zeitspanne z2 verwendet.

In der zweiten Zeitspanne z2 wird der elektrische Regelparameter Pi mittels des Wechselrichters 2 auf einen vorgegebenen zweiten Wartewert x2 eingestellt. In beispielhafter Ausführungsform in Fig. 5 wird auch der elektrische Regelparameter Pi von Stackstrom I_{S} auf Stackspannungs U_{S} geändert. Das heißt, dass der Stackspannungs-Sollwert U_{S,Set} mindestens auf die Stackspannung U_{S} des zuvor ermittelten Leistungsarbeitspunkts MPP (sprunghaft) erhöht wird, wodurch sich entsprechend der Strom-Spannungskennlinien 10 gemäß Fig. 2 der Stackstrom I_{S} (sprunghaft) reduziert. Der Wartewert x2 wird für eine vorgegebene Zeitdauer, beispielsweise 1 Sekunde, beibehalten. Damit kann sichergestellt werden, dass alle Module 7.i über deren MLSD-Einheit M wieder zuschalten, welche im Variationsbereich 14 abgeschaltet haben, weil die Stackspannung U_{S,Set} in der zweiten Zeitspanne z2 über dem zweiten Modulspannungsgrenzwert U_{M,G.2} liegt (hier nicht gezeigt). Wie am Ende der zweiten Zeitspanne z2 ersichtlich ist, erhöht sich mit dem Zuschalten der Module 7.i über die MLSD-Einheiten M, entsprechend auch der Stackstrom I_{S}.

Bei Beibehalten des Stackstrom-Sollwerts I_{S,Set} als Regelparameter Pi im zweiten Zeitbereich z2 kann es nötig sein, beim Zuschalten der einzelnen Module 7.i die Stackspannung U_{S} nach zu regeln, damit gewährleistet wird, dass die Stackspannung U_{S} über dem zweiten Modulspannungsgrenzwert U_{M,G.2} bleibt. Dabei kann dann davon ausgegangen werden, dass nach einer gewissen, z.B. durch den Wechselrichter 2 bestimmten oder einstellbaren Zeit nach dem Senden des PLC-Signals und/oder nach Erhöhen der Stackspannung U_{S}, wie in Fig. 5 in Zeitspanne z2 gezeigt, die Modulspannungen U_{M} über dem zweitem Modulspannungsgrenzwert U_{M,G.2} liegen und damit alle aktivierbaren MLSD-Einheiten M die Module 7.i zugeschaltet haben.

Auf die zweite Zeitspanne z2 folgt ein MPP-Tracking-Bereich 15, in welchem der neu ermittelte Leistungsarbeitspunkt MPP mit Stackspannung U_{S} und Stackstrom I_{S} vorgegeben und der Solarzellenstacks 3 bis zum nächsten MPP-Scan an diesem Leistungspunkt MPP betrieben wird. Dafür wird entsprechend die zuvor erhöhte Stackspannung U_{S} des Leistungsarbeitspunkts MPP wieder gesenkt und der Stackstrom I_{S} stellt sich entsprechend der Strom-Spannungskennlinie 10 ein. Damit wird eine leichte Adaption der Leistungsarbeitspunkt MPP ermöglicht, welcher sich aufgrund von Umweltbedingungen im Betrieb verändern kann.

Ein MPP Scan wird, wie oben beschrieben, durchgeführt, um zu gewährleisten, dass der Leistungsarbeitspunkt MPP einem Maximum (also auf der höchsten Spitze/Hügel wie in Fig. 4 und Fig. 5 im Stackleistungs P_{S} Diagramm) entspricht. Ein MPP-Tracker im MPP-Tracking-Bereich 15 verändert den Leistungsarbeitspunkt MPP lediglich geringfügig auf der Strom-Spannungskennlinie 10 bzw. Strom-Leistungskennlinie 11 und regelt daher ständig auf dem aktuellen Maximum, also der Spitze. Daher ist ein MPP-Tracker im MPP-Tracking-Bereich 15 nicht ausgelegt ein Maximum, wie der MPP-Scan zu finden.

In einer vorteilhaften Ausführungsform ist der erfindungsgemäße MPP-Scan auch an ein PLC-Signal geknüpft. Das PLC-Signal ist ein, in der Regel hochfrequentes, Signal, das zu regelmäßigen Zeitpunkten an die MLSD-Einheiten M übermittelt wird und welches das Zuschalten von deaktivierten Modulen 7.i über die jeweilige MLSD-Einheit M bewirkt. Das PLC-Signal wird beispielsweise von einem Wechselrichter 2 über die Leitungen 6 an die MLSD-Einheiten M gesendet. Vorteilhafterweise wird dieses PLC-Signal im Millisekundenbis Sekunden-Intervallen gesendet. Um die Zeitspannen z1, z2 so kurz wie möglich zu halten und damit auch die Dauer des gesamten MPP-Scans zu reduzieren, kann das PLC-Signal mit der ersten Zeitspanne z1 und/oder der zweiten Zeitspanne z1 abgestimmt werden. Damit kann erreicht werden, dass die Module 7.i sofort gestartet werden, wenn der zweite Modulspannungsgrenzwert U_{M,G.2} überschritten wird und dementsprechend die Zeitspanne z1 und/oder z2 beendet wird. Die jeweilige Zeitspanne ist also optimiert auf das Zuschalten der Module 7.i. Dies kann aber auch durch eine automatisierte Ermittlung der Zeiten erfolgen, indem beim aktuellen MPP-Scan die Zeitspannen gemessen werden und dementsprechend beim darauffolgenden MPP-Scan angepasst werden.

In einer vorteilhaften Ausführungsform sind auch die erste Zeitspanne z1 und die zweite Zeitspanne z2 von gleicher Dauer. Es ist möglich beide Zeitspannen z1, z2 an ein PLC-Signal zu knüpfen und/oder an das Zuschalten alle aktivierbaren Module 7.i in den Zeitspannen z1 und z2. Je nach Leistungsarbeitspunkt MPP kann sich aber die Zahl an zugeschalteten Modulen 7.i zwischen erster Zeitspanne z1 und die zweiter Zeitspanne z1 auch unterscheiden.

In einer vorteilhaften Ausführungsform wird zwischen aufeinanderfolgenden MPP-Scans jeweils ein MPP-Tracking durchgeführt, um den Leistungsarbeitspunkt MPP zu regeln.

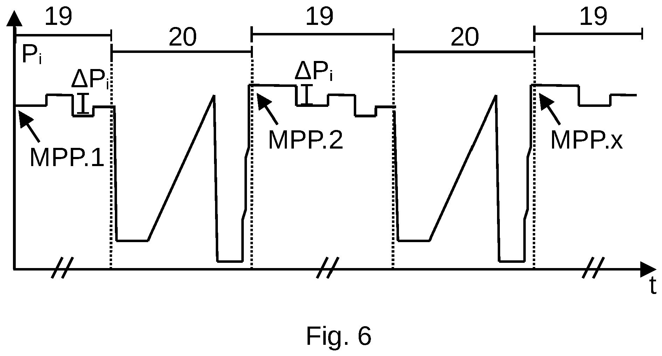

Fig. 6 zeigt schematisch den zeitlichen Ablauf, wobei zwischen aufeinanderfolgenden MPP-Scans 20 jeweils ein MPP-Tracking 19 ausgeführt wird. Bevor ein neuer Leistungsarbeitspunkt MPP (durch den MPP-Scan 20) bestimmt wird, läuft das MPP-Tracking 19 und variiert den elektrischen Regelparameter Pi in einem relativ zum Regelbereich des MPP-Scans 20 kleineren definierten Regelparameterbereich ΔPi (im Wesentlichen im Maximalbereich 12), also nur im Bereich des, durch den vor der ersten dargestellten MPP-Tracking 19 durchgeführten (nicht dargestellten) MPP-Scan 20, gefundenen ersten Leistungsarbeitspunkt MPP.1. Beispielsweise kann der Regelparameterbereich ΔPi wenige Prozent des Wertes des Leistungsarbeitspunktes MPP betragen, wie +/- 5%. Dadurch kommt es zu keiner Unterbrechung der Stromerzeugung wie beim MPP-Scan 20.

Verglichen mit dem MPP-Scan 20 kann das MPP-Tracking 19 daher wesentlich länger laufen, wie in der unterbrochenen Zeitachse t dargestellt ist. Dementsprechend sind die Verhältnisse zwischen MPP-Scan 20 und dem MPP-Tracking 19 in Fig. 6 nicht realitätsnah in Bezug auf die Dauer jeder Phase dargestellt. Auf eine Phase mit MPP-Tracking 19 folgt ein wesentlich kürzerer erfindungsgemäßer MPP-Scan 20, welcher einen neuen Leistungsarbeitspunkt MPP.2 des Solarzellenstacks 3 festlegt, der den zuvor ermittelten Leistungsarbeitspunkt MPP.1 ersetzt. Das MPP-Tracking 19 variiert mittels des kleineren Regelparameterbereichs ΔPi am aktuellen Leistungsarbeitspunkt MPP.2, bis ein neuerlicher MPP-Scan 20 gestartet wird. Somit kann mittels des erfindungsgemäßen MPP-Scan 20 sichergestellt werden, dass der Leistungsarbeitspunkt MPP.x mit allen zur Verfügung stehenden, aktiven Modulen ermittelt wurde und das MPP-Tracking 19 dementsprechend die Leistung des Solarzellenstacks 3 über die Betriebsdauer optimal geregelt wird. Die Leistungsarbeitspunkte MPP.1, MPP.2, MPP.x sind natürlich nicht immer gleich, da wie oben beschrieben, Verschattung 9.2 und/oder Verschmutzung 9.1 immer zu Änderungen in der Stackleistung P_{S} führen können.

## Patentansprüche

1. Verfahren zum Optimieren eines Leistungsarbeitspunkts (MPP) eines Solarzellenstacks (3), das eine Mehrzahl an Modulen (7) und einen Wechselrichter (2) aufweist, wobei jedes Modul (7.i) der Mehrzahl an Modulen (7) eine MLSD-Einheit (M) aufweist, die das verbundene Modul abschaltet, sobald eine Modulspannung des jeweiligen Moduls einen ersten Modulspannungsgrenzwert (UM,G.1) unterschreitet, und bei Überschreiten eines vorgegebenen zweiten Modulspannungsgrenzwertes (U_{M,G.2}) zuschaltet, aufweisend folgende Schritte:
- Definieren eines elektrischen Regelparameters (Pi);
- Veränderung des elektrischen Regelparameters (Pi) mittels des Wechselrichters (2) auf einen vorgegebenen ersten Wartewert (x1), wobei der erste Wartewert (x1) so festgelegt ist, dass der zweite Modulspannungsgrenzwert (U_{M,G.2}) der Mehrzahl an Modulen (7) überschritten wird;
- Halten des elektrischen Regelparameters (Pi) auf dem ersten Wartewert (x1) für eine vorgegebene erste Zeitspanne (z1), sodass die Mehrzahl an Modulen (7) durch die MLSD-Einheiten (M) zugeschaltet wird;
- Verändern des elektrischen Regelparameters (Pi) mittels des Wechselrichters (2) auf einen Parametergrenzwert (g1) in einem Variationsbereich (14) und Ermitteln von Strom-Spannungskennlinien (10) für die Mehrzahl an Modulen (7) im Variationsbereich (14);
- Ermitteln einer maximalen Stackleistung (P_{S}) des Solarzellenstacks (3) aus den im Variationsbereich (14) ermittelten Strom-Spannungskennlinien (10) der Mehrzahl an Modulen (7);
- Vorgeben der ermittelten maximalen Stackleistung (P_{S}) an den Solarzellenstack (3) als Leistungsarbeitspunkt (MPP).

2. Verfahren nach Anspruch 1, wobei nach dem Ermitteln des Leistungsarbeitspunktes (MPP) zusätzlich folgende Schritte durchgeführt werden:
- Verändern des elektrischen Regelparameters (Pi) mittels des Wechselrichters (2) auf einen vorgegebenen zweiten Wartewert (x2), wobei der zweite Wartewert (x2) so festgelegt ist, dass der zweite Modulspannungsgrenzwert (U_{M,G.2}) der Mehrzahl an Modulen (7) überschritten wird;
- Halten des elektrischen Regelparameters (Pi) auf dem zweiten Wartewert (x2) für eine vorgegebene zweite Zeitspanne (z2), sodass die Mehrzahl an Modulen (7) durch die MLSD-Einheiten (M) zugeschaltet wird.

3. Verfahren nach Anspruch 1 oder 2, wobei als der elektrische Regelparameter (Pi) ein Stackstrom (I_{S}) verwendet wird, wobei ein festgelegter Stackstrom-Sollwert (I_{S,set}) als der erste Wartewert (x1) verwendet wird und der Stackstrom-Sollwert (I_{S,set}) vom ersten Wartewert (x1) auf den Parametergrenzwert (g1) erhöht wird.

4. Verfahren nach Anspruch 1 oder 2, wobei als der elektrische Regelparameter (Pi) eine Stackspannung (U_{S}) verwendet wird, wobei als erster Wartewert (x1) ein festgelegter Stackspannungswert-Sollwert (U_{S,set}) verwendet wird und die Stackspannung (U_{S}) vom ersten Wartewert (x1) auf den Parametergrenzwert (g1) verringert wird.

5. Verfahren nach einem der Ansprüche 1 bis 4, wobei in der zweiten Zeitspanne (z2) ein anderer elektrischer Regelparameter (Pi) verwendet wird, als in der ersten Zeitspanne (z1).

6. Verfahren nach einem der Ansprüche 1 bis 5, wobei die erste Zeitspanne (z1) über eine vordefinierte Zeitdauer oder in Abhängigkeit eines vom Wechselrichter (2) an die MLSD-Einheiten (M) übermittelten PLC-Signals oder durch den Zeitpunkt des Zuschaltens eines Moduls (7) im Solarzellenstack (3) definiert wird und/oder dass die zweite Zeitspanne (z2) über eine vordefinierte Zeitdauer oder in Abhängigkeit eines vom Wechselrichter (2) an die MLSD-Einheiten (M) übermittelten PLC-Signals definiert wird.

7. Verfahren nach einem der Ansprüche 2 bis 6, wobei die erste Zeitspanne (z1) und die zweite Zeitspanne (z2) gleich lang sind.

8. Verfahren nach einem der Ansprüche 1 bis 7, wobei der Parametergrenzwert (g1) abhängig von einem vorgegebenen Festwert oder einem Referenzwert festgelegt wird.

9. Verfahren nach Anspruch 8, wobei als Referenzwert des Parametergrenzwerts (g1) ein Wert verwendet wird, bei welchem die Stackspannung (U_{S}) 30 - 60%, vorzugsweise 50%, der Stackspannung (U_{S}) aus einem zeitlich vor dem MPP-Scan liegenden Bereich (13) entspricht.

10. Verfahren nach einem der Ansprüche 1 bis 9, wobei nach dem Bestimmen des Leistungsarbeitspunkts (MPP) ein MPP-Tracking (19) durchgeführt wird, in welchem der ermittelte Leistungsarbeitspunkt (MPP) in einem definierten Regelparameterbereich (ΔPi) verändert wird, wobei der Regelparameterbereich (ΔPi) vorzugsweise ±10% des ermittelte Leistungsarbeitspunkts (MPP) beträgt.

11. Vorrichtung zum Optimieren eines Leistungsarbeitspunkts (MPP) eines Solarzellenstacks (3), wobei das Solarzellenstack (3) eine Mehrzahl an Modulen (7) aufweist, wobei jedes Modul (7.i) der Mehrzahl an Modulen (7) eine MLSD-Einheit (M) aufweist, die ausgebildet ist, das verbundene Modul (7.i) abzuschalten, sobald eine Modulspannung (UM) des jeweiligen Moduls (7.i) einen ersten Modulspannungsgrenzwert (U_{M,G.1}) unterschreitet, und bei Überschreiten eines zweiten Modulspannungsgrenzwertes (U_{M,G.2}) zuzuschalten, wobei ein Wechselrichter (2) vorgesehen ist, der ausgebildet ist am Solarzellenstack (3) folgende Schritte auszuführen:
- Definieren eines elektrischen Regelparameters (Pi);
- Verändern des elektrischen Regelparameters (Pi) mittels des Wechselrichters (2) auf einen vergebenen ersten Wartewert (x1), wobei der erste Wartewert (x1) so festgelegt ist, dass der zweite Modulspannungsgrenzwert (U_{M,G.2}) der Mehrzahl an Modulen (7) überschritten wird;
- Halten des elektrischen Regelparameters (Pi) auf dem ersten Wartewert (x1) für eine erste Zeitspanne (z1) sodass die Mehrzahl an Modulen (7) durch die MLSD-Einheiten (M) zugeschaltet wird;
- Verändern des elektrischen Regelparameters (Pi) mittels des Wechselrichters (2) auf einen Parametergrenzwert (g1) in einem Variationsbereich (14) und Ermitteln der Strom-Spannungskennlinien (10) der Mehrzahl an Modulen (7) im Variationsbereich (14);
- Ermitteln einer maximalen Stackleistung (PS) des Solarzellenstacks (3) aus den im Variationsbereich (14) ermittelten Strom-Spannungskennlinien (10) der Mehrzahl an Modulen (7);
- Vorgeben der ermittelten maximalen Stackleistung (PS) an den Solarzellenstack (3) als Leistungsarbeitspunkt (MPP).

12. Vorrichtung nach Anspruch 11, wobei der Wechselrichter (2) ausgebildet ist, nach dem Ermitteln des Leistungsarbeitspunkts (MPP) zusätzlich folgende Schritte durchzuführen:
- Verändern des elektrischen Regelparameters (Pi) mittels es Wechselrichters (2) auf einen zweiten Wartewert (x2), wobei der zweite Wartewert (x2) so festgelegt ist, dass der zweite Modulspannungsgrenzwert (U_{M,G.2}) der Mehrzahl an Modulen (7) überschritten wird;
- Halten des elektrischen Regelparameters (Pi) auf dem zweiten Wartewert (x2) für eine zweite Zeitspanne (z2), sodass die Mehrzahl an Modulen (7) durch die MLSD-Einheiten (M) zugeschaltet wird.

13. Vorrichtung nach Anspruch 11 oder 12, wobei der Wechselrichter (2) eine Steuereinheit enthält, wobei der Wechselrichter (2) ausgebildet ist, ein PLC-Signal an den Solarzellenstack (3) zu senden.

14. Vorrichtung nach einem der Ansprüche 11 bis 13, wobei einer Mehrzahl an Solarzellenstacks (3) über den Wechselrichter (2) ein Leistungsarbeitspunkt (MPP) vorgegeben wird.

## Claims

1. A method for optimizing a maximum power point (MPP) of a solar cell stack (3) comprising a plurality of modules (7) and an inverter (2), each module (7.i) of the plurality of modules (7) comprising an MLSD unit (M), which shuts down the connected module as soon as a module voltage of the respective module falls below a first module voltage threshold value (UM,G.1), and which switches the connected module on, when a predefined second module voltage threshold value (U_{M,G.2}) is exceeded, comprising the following steps:
- defining an electrical control parameter (Pi);
- changing the electrical control parameter (Pi) to a predefined first wait value (x1) with the inverter (2), the first wait value (x1) being determined such that the second module voltage threshold value (U_{M,G.2}) of the plurality of modules (7) is exceeded;
- keeping the electrical control parameter (Pi) at the first wait value (x1) for a predefined first time period (z1), such that the plurality of modules (7) is switched on by the MLSD units (M);
- changing the electrical control parameter (Pi) to a parameter threshold value (g1) in a variation range (14) using the inverter (2) and determining current-voltage curves (10) for the plurality of modules (7) in the variation range (14);
- determining a maximum stack power (P_{S}) of the solar cell stack (3) from the current-voltage curves (10) of the plurality of modules (7) determined in the variation range (14);
- predefining the determined maximum stack power (P_{S}) in the solar cell stack (3) as the maximum power point (MPP).

2. The method according to claim 1, wherein the following steps are additionally carried out after determining the maximum power point (MPP):
- changing the electrical control parameter (Pi) to a predefined second wait value (x2) with the inverter (2), the second wait value (x2) being determined such that the second module voltage threshold value (U_{M,G.2}) of the plurality of modules (7) is exceeded;
- keeping the electrical control parameter (Pi) at the second wait value (x2) for a predefined second time period (z2), such that the plurality of modules (7) is switched on by the MLSD units (M).

3. The method according to claim 1 or 2, wherein a stack current (I_{S}) is used as the electrical control parameter (Pi), an established stack current target value (I_{S,set}) being used as the first wait value (x1) and the stack current target value (I_{S,set}) being increased from the first wait value (x1) to the parameter threshold value (g1).

4. The method according to claim 1 or 2, wherein a stack voltage (U_{S}) is used as the electrical control parameter (Pi), an established stack voltage target value (U_{S,set}) being used as the first wait value (x1) and the stack voltage (U_{S}) being reduced from the first wait value (x1) to the parameter threshold value (g1).

5. The method according to one of the claims 1 to 4, wherein a different electrical control parameter (Pi) is used in the second time period (z2) than in the first time period (z1).

6. The method according to one of the claims 1 to 5, wherein the first time period (z1) is defined via a predefined time period or as a function of a PLC signal transmitted from the inverter (2) to the MLSD units (M) or by the point in time, at which a module (7) is switched on in the solar cell stack (3) and/or in that the second time period (z2) is defined via a predefined time period or as a function of a PLC signal transmitted from the inverter (2) to the MLSD units (M).

7. The method according to one of the claims 2 to 6, wherein the first time period (z1) and the second time period (z2) are of equal length.

8. The method according to one of the claims 1 to 7, wherein the parameter threshold value (g1) is determined based on a predefined fixed value or a reference value.

9. The method according to claim 8, wherein a value is used as the reference value of the parameter threshold value (g1), at which value the stack voltage (U_{S}) corresponds to 30-60%, preferably 50%, of the stack voltage (U_{S}) from a range (13) prior to the MPP scan.

10. The method according to one of the claims 1 to 9, wherein an MPP tracking (19) is carried out after the determination of the maximum power point (MPP), in which MPP tracking (19) the determined maximum power point (MPP) is changed within a defined control parameter range (ΔPi), wherein the control parameter range (ΔPi) preferably is ±10% of the determined maximum power point (MPP).

11. An apparatus for optimizing a maximum power point (MPP) of a solar cell stack (3), wherein the solar cell stack (3) comprises a plurality of modules (7), wherein each module (7.i) of the plurality of modules (7) comprises an MLSD unit (M), being designed to shut down the connected module (7.i) as soon as a module voltage (UM) of the respective module (7.i) falls below a first module voltage threshold value (U_{M,G.1}), and to switch the connected module (7.i) on, when a second module voltage threshold value (U_{M,G.2}) is exceeded, wherein an inverter (2) is provided, which is designed to carry out the following steps on the solar cell stack (3):
- defining an electrical control parameter (Pi);
- changing the electrical control parameter (Pi) to an assigned first wait value (x1) with the inverter (2), wherein the first wait value (x1) is established such that the second module voltage threshold value (U_{M,G.2}) of the plurality of modules (7) is exceeded;
- keeping the electrical control parameter (Pi) at the first wait value (x1) for a first time period (z1) such that the plurality of modules (7) is switched on by the MLSD units (M);
- changing the electrical control parameter (Pi) to a parameter threshold value (g1) in a variation range (14) using the inverter (2) and determining the current-voltage curves (10) of the plurality of modules (7) in the variation range (14);
- determining a maximum stack power (PS) of the solar cell stack (3) from the current-voltage curves (10) of the plurality of modules (7) determined in the variation range (14);
- predefining the determined maximum stack power (PS) in the solar cell stack (3) as the maximum power point (MPP).

12. The apparatus according to claim 11, wherein the inverter (2) is designed to carry out the following additional steps after determining the maximum power point (MPP):
- changing the electrical control parameter (Pi) to a second wait value (x2) with the inverter (2), the second wait value (x2) being established such that the second module voltage threshold value (U_{M,G.2}) of the plurality of modules (7) is exceeded;
- keeping the electrical control parameter (Pi) at the second wait value (x2) for a second time period (z2) such that the plurality of modules (7) is switched on by the MLSD units (M).

13. The apparatus according to claim 11 or 12, wherein the inverter (2) comprises a control unit, wherein the inverter (2) is designed to transmit a PLC signal to the solar cell stack (3).

14. The apparatus according to one of the claims 11 to 13, wherein a maximum power point (MPP) is predefined for a plurality of solar cell stacks (3) via the inverter (2).

## Revendications

1. Procédé permettant d'optimiser un point de puissance maximale (MPP) d'un empilement de cellules solaires (3) qui présente une pluralité de modules (7) et un onduleur (2), dans lequel chaque module (7.i) de la pluralité de modules (7) présente une unité MLSD (M) qui désactive le module connecté dès qu'une tension de module du module respectif passe en dessous d'une première valeur limite de tension de module (UM,G.1) et le réactive en cas de dépassement d'une seconde valeur limite de tension de module (U_{M,G.2}) prédéfinie, présentant les étapes suivantes :
- définition d'un paramètre de régulation électrique (Pi) ;
- modification du paramètre de régulation électrique (Pi) à l'aide de l'onduleur (2) jusqu'à atteindre une première valeur d'attente (x1) prédéfinie, dans lequel la première valeur d'attente (x1) est fixée de sorte que la seconde valeur limite de tension de module (U_{M,G.2}) de la pluralité de modules (7) est dépassée ;
- maintien du paramètre de régulation électrique (Pi) à la première valeur d'attente (x1) pendant un premier intervalle de temps (z1) prédéfini, de sorte que la pluralité de modules (7) est activée par les unités MLSD (M) ;
- modification du paramètre de régulation électrique (Pi) à l'aide de l'onduleur (2) jusqu'à atteindre une valeur limite de paramètre (g1) dans une plage de variation (14) et détermination de courbes caractéristiques courant-tension (10) pour la pluralité de modules (7) dans la plage de variation (14) ;
- détermination d'une puissance d'empilement maximale (P_{S}) de l'empilement de cellules solaires (3) à partir des courbes caractéristiques courant-tension (10) de la pluralité de modules (7) déterminées dans la plage de variation (14) ;
- prédéfinition de la puissance d'empilement maximale (P_{S}) déterminée pour l'empilement de cellules solaires (3) comme point de puissance maximale (MPP).

2. Procédé selon la revendication 1, dans lequel, après la détermination du point de puissance maximale (MPP), les étapes suivantes sont en outre effectuées :
- modification du paramètre de régulation électrique (Pi) à l'aide de l'onduleur (2) jusqu'à atteindre une seconde valeur d'attente (x2) prédéfinie, dans lequel la seconde valeur d'attente (x2) est fixée de sorte que la seconde valeur limite de tension de module (U_{M,G.2}) de la pluralité de modules (7) est dépassée ;
- maintien du paramètre de régulation électrique (Pi) à la seconde valeur d'attente (x2) pendant un second intervalle de temps (z2) prédéfini, de sorte que la pluralité de modules (7) est activée par les unités MLSD (M).

3. Procédé selon la revendication 1 ou 2, dans lequel est utilisé comme paramètre de régulation électrique (Pi) un courant d'empilement (I_{S}), dans lequel une valeur de consigne de courant d'empilement (I_{S,set}) fixée est utilisée comme première valeur d'attente (x1) et la valeur de consigne de courant d'empilement (I_{S,set}) est augmentée de la première valeur d'attente (x1) à la valeur limite de paramètre (g1).

4. Procédé selon la revendication 1 ou 2, dans lequel est utilisée comme paramètre de régulation électrique (Pi) une tension d'empilement (U_{S}), dans lequel une valeur de consigne de tension d'empilement (U_{S,set}) fixée est utilisée comme première valeur d'attente (x1) et la tension d'empilement (U_{S}) est réduite de la première valeur d'attente (x1) à la valeur limite de paramètre (g1).

5. Procédé selon l'une des revendications 1 à 4, dans lequel, au cours du second intervalle de temps (z2), un paramètre de régulation électrique (Pi) différent de celui utilisé au cours du premier intervalle de temps (z1) est utilisé.

6. Procédé selon l'une des revendications 1 à 5, dans lequel le premier intervalle de temps (z1) est défini par l'intermédiaire d'une durée prédéfinie ou en fonction d'un signal PLC transmis par l'onduleur (2) aux unités MLSD (M) ou par l'instant de l'activation d'un module (7) dans l'empilement de cellules solaires (3), et/ou en ce que le second intervalle de temps (z2) est défini par l'intermédiaire d'une durée prédéfinie ou en fonction d'un signal PLC transmis par l'onduleur (2) aux unités MLSD (M).

7. Procédé selon l'une des revendications 2 à 6, dans lequel le premier intervalle de temps (z1) et le second intervalle de temps (z2) ont la même durée.

8. Procédé selon l'une des revendications 1 à 7, dans lequel la valeur limite de paramètre (g1) est fixée en fonction d'une valeur fixe prédéfinie ou d'une valeur de référence.

9. Procédé selon la revendication 8, dans lequel est utilisée comme valeur de référence de la valeur limite de paramètre (g1) une valeur pour laquelle la tension d'empilement (U_{S}) correspond à 30 à 60 %, de préférence à 50 %, de la tension d'empilement (U_{S}) provenant d'une plage (13) située temporellement avant le balayage MPP.

10. Procédé selon l'une des revendications 1 à 9, dans lequel, après la détermination du point de puissance maximale (MPP), un suivi de MPP (19) est effectué, au cours duquel le point de puissance maximale (MPP) déterminé est modifié dans une plage de paramètres de régulation (Δpi) définie, dans lequel la plage de paramètres de régulation (ΔPi) est de préférence ± 10 % du point de puissance maximale (MPP) déterminé.

11. Dispositif permettant d'optimiser un point de puissance maximale (MPP) d'un empilement de cellules solaires (3), dans lequel l'empilement de cellules solaires (3) présente une pluralité de modules (7), dans lequel chaque module (7.i) de la pluralité de modules (7) présente une unité MLSD (M) configurée pour désactiver le module (7.i) connecté dès qu'une tension de module (UM) du module (7.i) respectif passe en dessous d'une première valeur limite de tension de module (U_{M,G.1}), et pour le réactiver en cas de dépassement d'une seconde valeur limite de tension de module (U_{M,G.2}), dans lequel un onduleur (2) est prévu, lequel est configuré pour exécuter les étapes suivantes sur l'empilement de cellules solaires (3) :
- définition d'un paramètre de régulation électrique (Pi) ;
- modification du paramètre de régulation électrique (Pi) à l'aide de l'onduleur (2) jusqu'à atteindre une première valeur d'attente (x1) prédéfinie, dans lequel la première valeur d'attente (x1) est fixée de sorte que la seconde valeur limite de tension de module (U_{M,G.2}) de la pluralité de modules (7) est dépassée ;
- maintien du paramètre de régulation électrique (Pi) à la première valeur d'attente (x1) pendant un premier intervalle de temps (z1), de sorte que la pluralité de modules (7) est activée par les unités MLSD (M) ;
- modification du paramètre de régulation électrique (Pi) à l'aide de l'onduleur (2) jusqu'à atteindre une valeur limite de paramètre (g1) dans une plage de variation (14) et détermination de courbes caractéristiques courant-tension (10) de la pluralité de modules (7) dans la plage de variation (14) ;
- détermination d'une puissance d'empilement maximale (PS) de l'empilement de cellules solaires (3) à partir des courbes caractéristiques courant-tension (10) de la pluralité de modules (7) déterminées dans la plage de variation (14) ;
- prédéfinition de la puissance d'empilement maximale (PS) déterminée pour l'empilement de cellules solaires (3) comme point de puissance maximale (MPP).

12. Dispositif selon la revendication 11, dans lequel l'onduleur (2) est configuré pour effectuer en outre, après la détermination du point de puissance maximale (MPP), les étapes suivantes :
- modification du paramètre de régulation électrique (Pi) à l'aide de l'onduleur (2) jusqu'à atteindre une seconde valeur d'attente (x2), dans lequel la seconde valeur d'attente (x2) est définie de sorte que la seconde valeur limite de tension de module (U_{M,G.2}) de la pluralité de modules (7) est dépassée ;
- maintien du paramètre de régulation électrique (Pi) à la seconde valeur d'attente (x2) pendant un second intervalle de temps (z2), de sorte que la pluralité de modules (7) est activée par les unités MLSD (M).

13. Dispositif selon la revendication 11 ou 12, dans lequel l'onduleur (2) comprend une unité de commande, dans lequel l'onduleur (2) est configuré pour envoyer un signal PLC à l'empilement de cellules solaires (3).

14. Dispositif selon l'une des revendications 11 à 13, dans lequel un point de puissance maximale (MPP) est prédéfini pour une pluralité d'empilements de cellules solaires (3) par l'intermédiaire de l'onduleur (2).
